# EUROPEAN PATENT APPLICATION

(11) **EP 0 978 473 A1**
(43) Date of publication of application: **09.02.2000**
(21) Application number: 98500222.9
(22) Date of filing: 09.10.1998
(51) Int. Cl.: B66D 5/14, F16D 59/02

(54) **Automatic braking system for reversible transmission**

(30) Priority: 05.08.1998 ES 9801681
(71) Applicant: Cunat Martinez, Vicente, 46560 Masalfasar (Valencia) (ES)
(72) Inventor: Cunat Martinez, Vicente, 46560 Masalfasar (Valencia) (ES)
(74) Representative: Flaccus, Rolf-Dieter, Dr.

(57) **Abstract**

The system is applicable to reducers designed to displace vertical loads.

Its structure consists of: an anti-return bearing (6), its inner race (15) turning freely in the direction in which the load is lifted and locked when the direction of rotation of the driving shaft (1) is reversed; a brake disc (7) connected to the outer race (16) of the bearing (6), which remains still when the latter turns freely while the load is being lifted, whereas it is driven when the outer race is locked upon rotation being reversed; a brake box (8) supporting shoes (9) that are permanently applied onto the disc (7); a shoe-bearing part holding shoes (11) permanently applied onto the opposite face of the disc (7); and a system for regulating the braking pressure, consisting of a spring (12) the compression of which is established by turning the lid (14) of the box (8) which is screwed on its mouth.

## Description

### OBJECT

The object of the invention protected in this Patent application is an **Automatic braking system for reversible transmissions**.

### PRIOR ART

Reducers are mechanical means that transmit rotary movements between two orthogonal shafts, namely a driving and a driven shaft, in such a way that the latter's angular velocity is less than the former's, with a constant proportionality ratio.

Among known reducers, a reducer comprising an endless screw connected to the driving shaft, with a crown wheel connected to the driven shaft, is extensively applied.

In some applications of these mechanisms it is also necessary for the direction of rotation of the driven shaft to be reversed under a load. That is for instance the case when loads are vertically displaced (lifting and lowering) in quick and frequent operations: automatic rising doors, depalletising machines, etc.

It is also necessary in these cases for the direction of rotation of the driving shaft to be reversed and, hence, for the entire transmission system to previously pass though zero velocity.

Now therefore, in order to cut down on the time taken by this operation and prevent the acceleration which would take place whilst lowering the load, the driving shaft is fitted with a braking means that is automatically activated when reversal starts.

The known braking means generally used heretofore are actuated electromagnetically, but their actuation is however effected with abrupt movements, resulting in undesirable effects such as bumping, vibration, noise, etc.

### DESCRIPTION OF THE INVENTION

The invention subject of this Patent is aimed at overcoming the drawbacks inherent in the above-described reversible transmissions with electromagnetic braking and has been devised and designed with this priority objective in mind.

The electromagnetic braking procedure has thus been replaced with a different purely mechanically operated one, which is smoothly actuated and works silently.

The automatic braking mechanism essentially consists of the following elements:
- an anti-return bearing, keyed to the end of the driving shaft opposite the input end, its inner race turning freely in the direction in which the load is lifted, but being locked when the direction of rotation of the driving shaft is reversed, i.e. when the load is lowered;
- a part conforming the brake disc, connected to the outer race of the anti-return bearing, in such a way as to remain still when the latter turns freely (the load is lifted), whereas it is driven when the bearing is locked upon rotation being reversed (the load is lowered);
- a brake box containing the entire mechanism and supporting the shoes that are permanently applied onto one of the faces of the brake disc;
- a shoe-bearing part carrying the shoes that are applied onto the opposite face of the disc;
- a system for regulating the braking pressure permanently exerted by the shoes on the disc, consisting of a helical spring, the core of which is a central spigot of the shoe-bearing part, its compression being established by turning the lid of the brake box, which is screwed on its mouth.

With the aforesaid elements, operation of the automatic braking system is as follows:

While the driving shaft lifts the load, the inner race of the anti-return bearing turns freely and the brake disc remains still, with the shoes permanently pressed against it.

When the driving shaft reverses the direction of rotation, the very weight of the downward moving load tends to accelerate the same, which supplementary strain is offset by the friction of the fixed shoes on the disc, for the latter starts turning driven by the outer race of the bearing which turns because it is locked one way.

### BRIEF DESCRIPTION OF THE DRAWINGS

In order to provide a fuller description of the invention and for ease of understanding of its formal, structural and functional features, drawings are attached hereto which schematically represent different aspects of a preferred embodiment of the automatic braking mechanism for reversible transmissions subject of this Patent.

In the drawings:

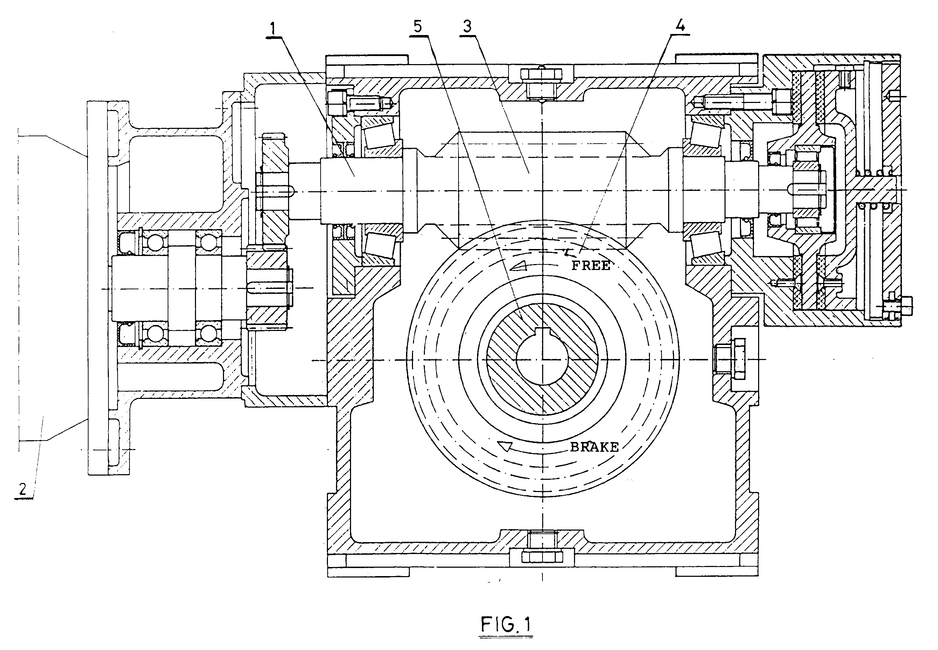

- Figure 1 represents a longitudinal section in the direction of the driving shaft of the reducer assembly, fitted with the automatic braking mechanism;

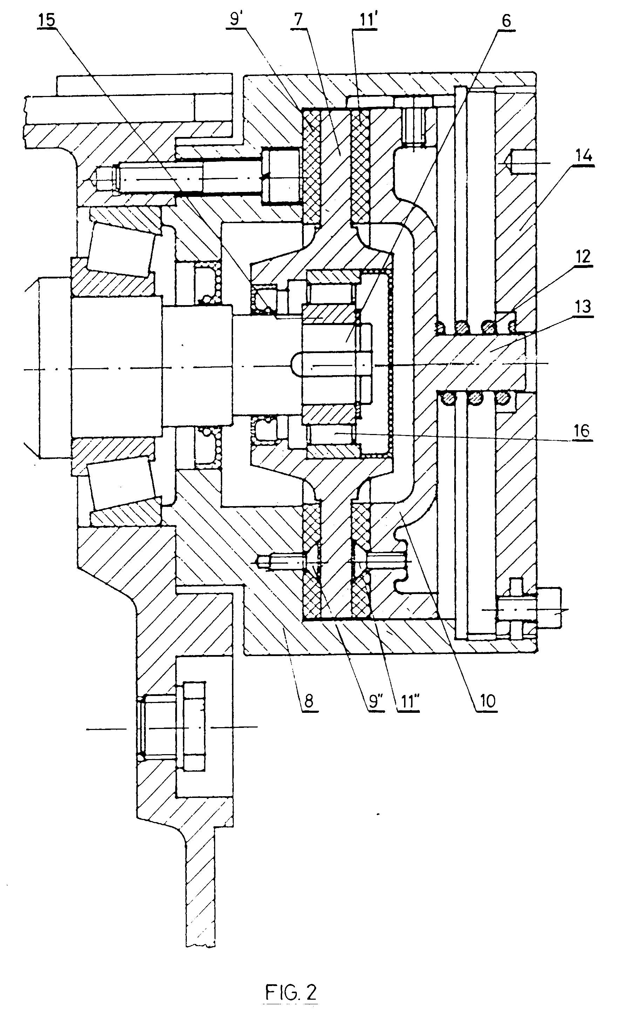

- Figure 2 is another longitudinal section limited to the automatic braking mechanism as such, showing it in greater detail and on a larger scale.

### DESCRIPTION OF A PREFERRED EMBODIMENT

The structure and operation of the automatic braking mechanism for reversible transmissions subject of the invention will presently be described in order to full clearly show the nature and scope of its advantageous application, with reference to the drawings in which a preferred embodiment of said object is represented for informative purposes and should hence be construed in the broadest sense and not to limit the application and contents of the invention.

The automatic braking mechanism for reversible transmissions is preferably applied to reducers designed for the displacement of vertical loads (lifting and lowering), of the kind consisting of two orthogonal shafts, one of which is a driving shaft (1) directly actuated by a motor (2) and with an endless screw (3), which engages a crown wheel (4) connected to the driven shaft (5).

Its structure consists of:
- an anti-return bearing (6) keyed to the end of the driving shaft (1) opposite the input end, its inner race (15) turning freely in the direction in which the load is lifted, but being locked when the direction of rotation of the driving shaft (1) is reversed, i.e. for the load to be lowered;
- a brake disc (7) connected to the outer race (16) of the bearing (6), which remains still when the latter turns freely while the load is being lifted, whereas it is driven when the outer race (16) of the bearing (6) is locked upon rotation being reversed when the load is lowered;
- a brake box (8) containing the entire mechanism and supporting shoes (9')-(9'') that are permanently applied onto one of the faces of the disc (7);
- a shoe-bearing part (10) holding shoes (11')-(11'') permanently applied onto the opposite face of the disc (7);
- a system for regulating the braking pressure permanently exerted by the shoes (9) and (11) on the disc (7), consisting of a helical spring (12) the core of which is a central spigot (13) of the shoe-bearing part (10), its compression being established by turning the lid (14) of the brake box (8), which is screwed on its mouth. Operation of the automatic braking system is as follows:

While the driving shaft (1) lifts the load, the inner race (15) of the anti-return bearing (6) turns freely and the brake disc (7) remains still.

When the driving shaft (1) reverses the direction of rotation, during the downward movement of the load, the brake disc (7) begins to turn driven by the outer race (16) of the bearing (6) which turns because it is locked one way, subjecting the disc (7) to the friction of the shoes (9) and (11) permanently applied against it, thereby offsetting the acceleration tendency due to the very weight of the downward load.

## Claims

1. An automatic braking mechanism for reversible transmissions which is preferably applied to reducers designed to displace vertical loads (lifting and lowering), of the kind consisting of two orthogonal shafts, one of which is a driving shaft (1) directly actuated by a motor (2) and with an endless screw (3), which engages a crown wheel (4) connected to the driven shaft (5), essentially **characterised** in that its structure consists of: an anti-return bearing (6) keyed to the end of the driving shaft (1) opposite the input end, its inner race (15) turning freely in the direction in which the load is lifted, but being locked when the direction of rotation of the driving shaft (1) is reversed, for the load to be lowered; a brake disc (7) connected to the outer race (16) of the bearing (6), which remains still when the latter turns freely while the load is being lifted, whereas it is driven when the outer race (16) of the bearing (6) is locked upon rotation being reversed when the load is lowered; a brake box (8) containing the entire mechanism and supporting shoes (9')-(9'') that are permanently applied onto one of the faces of the disc (7); a shoe-bearing part (10) holding shoes (11')-(11'') permanently applied onto the opposite face of the disc (7); a system for regulating the braking pressure permanently exerted by the shoes (9) and (11) on the disc (7), consisting of a helical spring (12) the core of which is a central spigot (13) of the shoe-bearing part (10), its compression being established by turning the lid (14) of the brake box (8), which is screwed on its mouth; and therefore while the driving shaft (1) lifts the load, the inner race (15) of the anti-return bearing (6) turns freely and the brake disc (7) remains still; and when the driving shaft (1) reverses the direction of rotation, during the downward movement of the load, the brake disc (7) begins to turn driven by the outer race (16) of the bearing (6) which turns because it is locked one way, subjecting the disc (7) to the friction of the shoes (9) and (11) permanently applied against it, thereby offsetting the acceleration tendency due to the very weight of the downward load.
